Europäisches Patentamt

European Patent Office

Office européen des brevets

(19)

(11) EP 0 921 410 A2

(12) **EUROPÄISCHE PATENTANMELDUNG**

(43) Veröffentlichungstag:
**09.06.1999 Patentblatt 1999/23**

(51) Int Cl.⁶: **G01S 3/72**

(21) Anmeldenummer: **98440263.6**

(22) Anmeldetag: **20.11.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **05.12.1997 DE 19753932**

(71) Anmelder: **ALCATEL**
**75008 Paris (FR)**

(72) Erfinder:
- **Tangemann, Michael, Dr.**
  **71229 Leonberg (DE)**
- **Hoek, Cornelis**
  **71732 Tamm (DE)**

(74) Vertreter: **Brose, Gerhard, Dipl.-Ing. et al**
**Alcatel**
**Intellectual Property Department, Stuttgart**
**Postfach 30 09 29**
**70449 Stuttgart (DE)**

(54) **Verfahren zur Bestimmung der Empfangsrichtung mittels einer Gruppenantenne, Funkfeststation und Funksystem**

(57)    Die Bestimmung der Empfangsrichtung einer Gruppenantenne, die an eine Funkfeststation eines Funksystems, insbesondere eines SDMA-Mobilfunksystems (Space Divisional Multiple Access), angeschlossen ist, wird durch Störungen bei Mehrwegeempfang erschwert. Es ist ein Verfahren bekannt, das nach dem sogenannten ESPRIT-Algorithmus arbeitet und das für eine zuverlässige Richtungsschätzung besonders geeignet ist, da dort zunächst für jedes Antennenelement der Empfangspegel (Sm) und die Phasenlage (φm) gemessen und in eine symetrische Matrix (A) eingetragen werden, um dann durch Eigenwertzerlegung die Empfangsrichtung zu bestimmen.

Es wird ein einfacheres und schnelleres Verfahren (100) vorgeschlagen, bei dem für den dominanten Eigenwert ($\lambda$1) dieser Matrix (A) der Eigenvektor (Wn) berechnet wird, der die Richtung (DOA) angibt, aus der das Funksignal (S) mit dem größten Empfangspegel empfangen wird (Schritte 130 u. 140). Die rechenintensive Eigenwertzerlegung entfällt.

110 — Funksignal s(t) = exp(-jωt).

Signal-Vektor x(t) erfassen:

$$x(t) = [exp(-j\omega t), exp(-j\omega t - \varphi 1), exp(-j\omega t - \varphi 2) ..... exp(-j\omega t - \varphi m-1)]^T$$

120 — Bilde Matrix **A** :

$$\begin{bmatrix} 1 & exp(-j\varphi 1) & exp(-j\varphi 2)..... & exp(-j\varphi m-1) \\ exp(+j\varphi 1) & 1 & exp(-j\varphi 1) & ..... \\ exp(+j\varphi 2) & exp(+j\omega t) & 1 & ..... \\ ..... & ..... & ..... & ..... \\ exp(+j\varphi m-1) & ..... & ..... & 1 \end{bmatrix}$$

130 — Berechne für den dominanten Eigenwert $\lambda$1 der Matrix A den Eigenvektor **Wn** (siehe Fig. 2b).

140 — Richte das Antennendiagramm aus in die Richtung des berechneten Eigenvektors **Wn.**

Fig.2a

EP 0 921 410 A2

**Beschreibung**

Die Erfindung betrifft ein Verfahren zur Bestimmung der Empfangsrichtung eines durch Mehrwegeausbreitung gesteuerten Funksignals, das mittels einer Gruppenantenne, die mehrere Antennenelemente hat, empfangen wird nach dem Oberbegriff des Anspruchs 1. Außerdem betrifft die Erfindung ein nach diesem Verfahren arbeitende Funkfeststation, sowie ein damit ausgestattetes Funksystem nach einem der Oberbegriffe der nebengeordneten Ansprüche.

Aus der US-A-4,965,732 ist ein Verfahren zur Bestimmung der Empfangsrichtung eines durch Mehrwegeausbreitung gestörten Funksignales bekannt. Dort wird die Bestimmung der Empfangsrichtung mit Hilfe des sogenannten "ESPRIT"-Algorithmus durchgeführt (ESPRIT: Estimation of Signal Parameters using Rotational Invariance Techniques). Die von einer Gruppenantenne mit Antennenelementen empfangenen Funksignale werden zur Bestimmung der Empfangsrichtung (sogenannte DOA: Direction Of Arrival) wie folgt ausgewertet: Zunächst werden für jedes Antennenelement Meßwerte erfaßt, die den Empfangspegel und die Phasenlage angeben. Aus den erfaßten Meßwerten werden zwei Matritzen gebildet, nämlich die sogenannte Auto-Kovarianzmatrix und die sogenannte Kreuzkovarianzmatrix. Anschließend wird durch Eigenwertzerlegung der beiden Matritzen die Anzahl der Signalquellen und die Varianz des Rauschens bestimmt, aus denen wiederum der sogenannte "subspace rotation operator" berechnet werden kann, der Angaben über die Empfangsrichtung enthält. (siehe in US-A-4,965,732 die Spalte 10, unten). Die bei dem ESPRIT-Algorithmus durchgeführte Zerlegung der Matritzen in ihre Eigenwerte (sogenannte "eigen-decomposition") ist eine rechenintensive Operation. Demnach wird für die Durchführung des Verfahrens zur Bestimmung der Empfangsrichtung ein leistungsfähiger Rechner benötigt. Da das Verfahren innerhalb einer Funkfeststation eingesetzt wird, die mittels einer Gruppenantenne Funksignale aus verschiedenen Richtungen empfangen soll, gestaltet sich der Aufbau der Funkfeststation sehr aufwendig.

Aus dem Artikel "The Performance Enhencement of Multibeam Adaptive Base-Station Antennas for Cellular land Mobile Radio Systems" von S.C. Swales et al., erschienen in der Fachzeitschrift "IEEE Transaction on Vehicular Technology", Band 39, Nr. 1, Februar 1990, Seite 56 - 67, ist eine Funkfeststation beschrieben, die über eine adaptive Gruppenantenne -eine sogenannte "smart antenna"- verfügt., Zur Ausrichtung des Antennendiagramms wird ein Auswertevorrichtung -ein sogenannter "beam former" eingesetzt. Der Artikel befaßt sich im Wesentlichen mit dem Aufbau eines zellularen Funknetzes, bei dem Feststationen mit solchen adaptiven Gruppenantennen verwendet werden, um eine höhere Ausnutzung der Funkresourcen zu erreichen. Dies geschieht dadurch, daß ein und dieselbe Funkfrequenz in mehrere Richtungen für verschiedene Funkkanäle wiederverwendet werden kann. Um Störungen zwischen benachbarten Funkfeststationen zu vermeiden, wird anhand der sogenannten "co-channel reuse ratio Q" die Funknetzplanung durchgeführt (s. dort Seite 59, linke Spalte). Über die Ausrichtung der Antennendiagramme und die damit verbundene Bestimmung der Empfangsrichtung ist dort nichts Näheres beschrieben.

Aus dem Artikel "Smart Antenna Arrays for CDMA Systems" von J. S. Thompson, in der Fachzeitschrift "IEEE Personal Comunications", Oktober 1996, Seiten 16 - 25, werden Gruppenantennen (smart antenna arrays) beschrieben, an denen zur Bestimmung der Empfangsrichtung der ein Verfahren mit Hilfe des ESPRIT-Algorithmus durchgeführt wird. Demnach ist auch das dort beschriebene Verfahren sehr rechenintensiv und aufwendig.

Aufgabe der Erfindung ist es, das eingangs genannte Verfahren zu verbessern durch den Einsatz von einfacheren und schnelleren Algorithmen, um eine Echtzeitrechnung der Empfangsrichtung mittels einfacher Prozessor-Technologie, insbesondere mittels digitaler Signalprozessoren, zu ermöglichen. Außerdem sollen eine Funkfeststation, die das verbesserte Verfahren durchführt, und ein mit der Funkfeststation ausgestattetes Funksystem vorgeschlagen werden.

Die Aufgabe wird gelöst durch ein Verfahren mit den Merkmalen des Anspruchs 1 und durch eine Funkfeststation, sowie durch ein Funksystem mit den Merkmalen nach einem der nebengeordneten Ansprüchen.

Demnach werden zur Bestimmung der Empfangsrichtung die erfaßten Empfangspegel und Phasenlagen in eine symmetrische Mastrix eingetragen, die M Spalten und M Zeilen hat, und es wird für den dominanten Eigenwert dieser Matrix der Eigenvektor berechnet, der die Richtung angibt, aus der das Funksignal mit dem größten Empfangspegel empfangen wird.

Anstelle einer aufwendigen Eigenwertzerlegung, wird demnach nur der dominante Eigenwert bestimmt, der die Empfangsrichtung für den größten Empfangspegel angibt. Somit wird nur diejenige Empfangsrichtung bestimmt, die die Empfangsrichtung des stärksten Signales wiedergibt, wodurch sich ein Antennendiagramm mit einer Hauptkeule ausbildet, die in diese Richtung zeigt, und wobei Nebenkeulen für die Nebenrichtungen weitestgehend unterdrückt werden können. Eine einfache Realisierung des Verfahrens ist beispielsweise durch die noch näher beschriebene Verwendung der sogenannten "power method" möglich. Die Nebenkeulen können unterdrückt werden mittels dem sogenannten "Tchebychev Tapering".

Besonders vorteilhafte Ausführungen der Erfindung sind den Unteransprüchen zu entnehmen:

Der dominante Eigenwert wird geschätzt, indem der Eigenvektor der Matrix mittels Berechnung des Rayleighquotienten bestimmt wird. Außerdem kann der Eigenvektor sehr schnell durch Auslesen der ersten Spalte der Matrix geschätzt werden.

Durch eine iterative Berechnung des Eigenvektors solange, bis die Änderung des Rayleighquotienten einen vorgegebenen Toleranzwert unterschreitet, ermöglicht eine genauere Schätzung des dominanten Eigenwertes innerhalb einer durch den Toleranzwert und der Rechengeschwindigkeit festgelegten Zeitintervalls. Das Verfahren kann auch dadurch abgekürzt werden, indem die Iteration nach einer vorgegebenen Anzahl von Durchläufen abgebrochen wird.

Der zur Bestimmung der Empfangsrichtung zuletzt berechnete Vektor, der dem gesuchten Eigenvektor entspricht, wird auch zur Bestimmung der Senderichtung ausgewertet mittels einer Wichtung dieses Vektors. Dabei wird die Wichtung aus einem Frequenzversatz zwischen der Sendefrequenz und der Empfangsfrequenz ermittelt, wenn sich Empfangsfrequenz und Sendefrequenz voneinander unterscheiden (Frequenzduplexübertragung). Somit wird eine schnelle Berechnung der Senderichtung ermöglicht.

Die Erfindung wird nun im folgenden näher beschrieben anhand eines Ausführungsbeispiels und unter Zuhilfenahme folgender Figuren:

Fig. 1,    die schematisch eine Funkfeststation mit Gruppenantenne und eine Mobilfunkstation darstellt, innerhalb einer typischen durch Mehrwegeausbreitung gekennzeichneten Funkübertragungssituation;

Fig. 2 a,    die schematisch ein Ablaufdiagramm für ein erfindungsgemäßes Verfahren darstellt; und

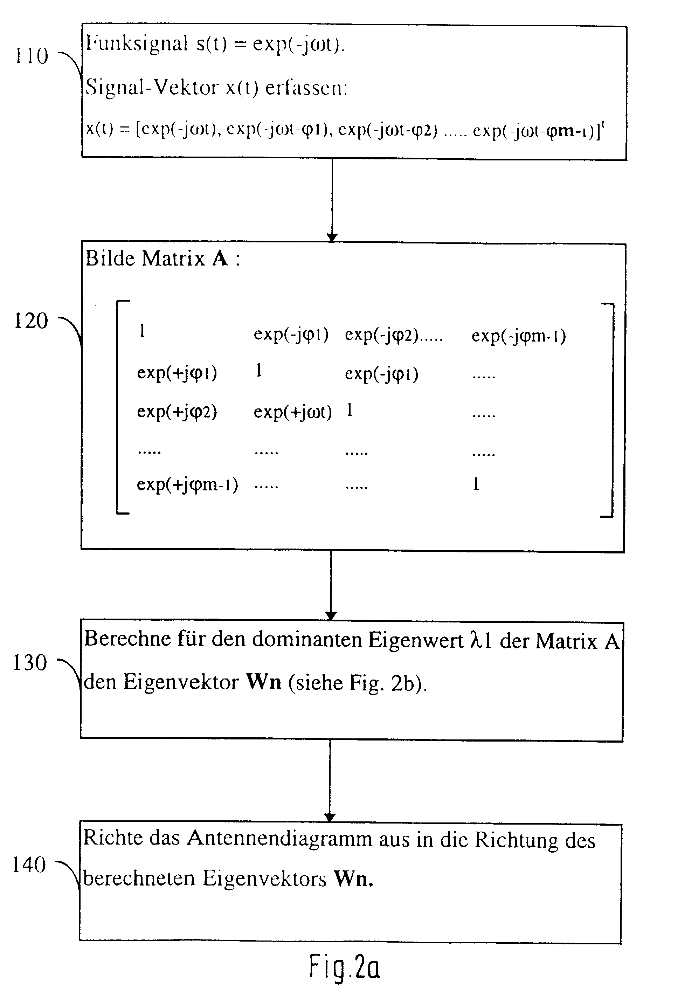

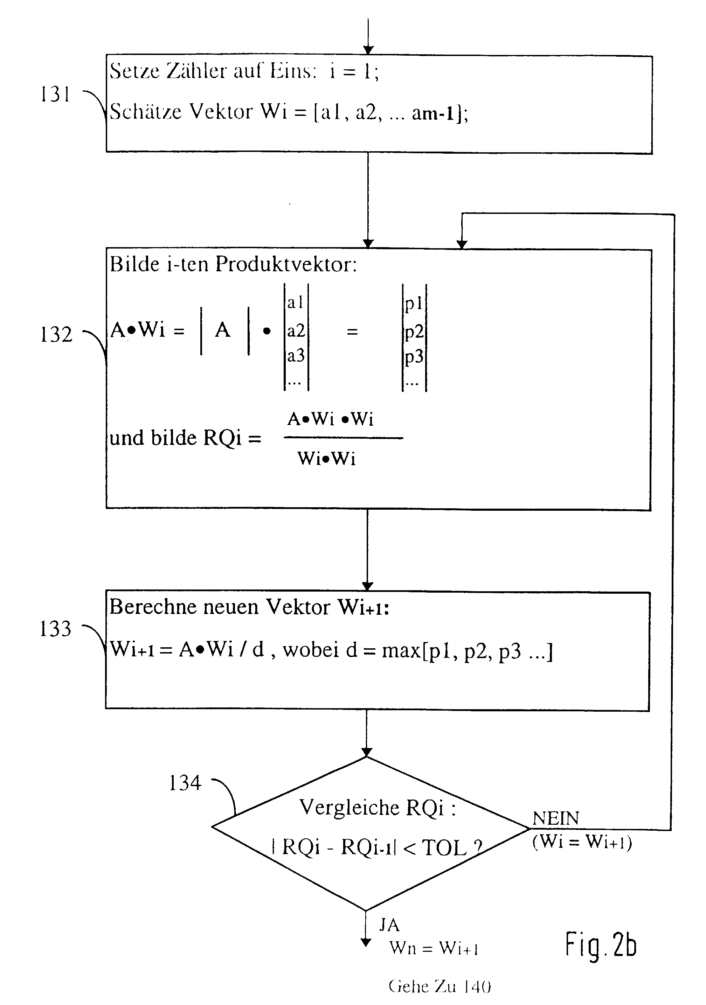

Fig. 2 b,    die schematisch das Ablaufdiagramm für mehrere iterativ durchschrittene Teilschritte des Verfahrens darstellt.

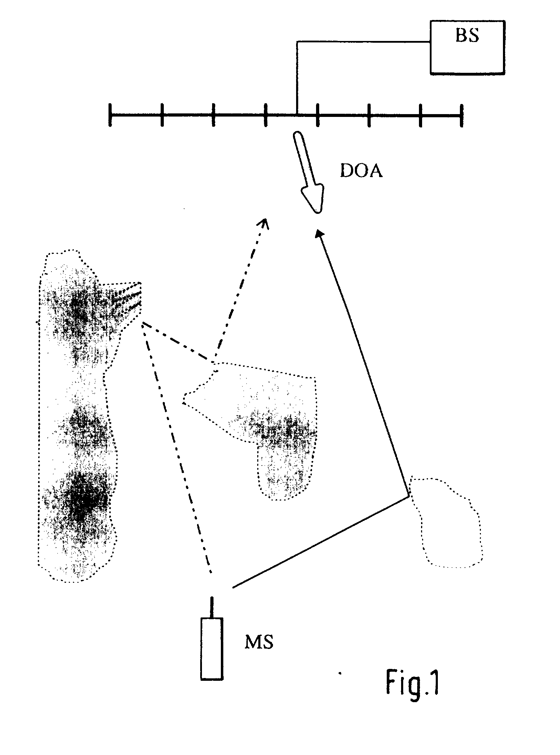

In Figur 1 ist schematisch ein typisches Szenario für die Mehrwegeausbreitung innerhalb eines Mobilfunksystems dargestellt. Für das Mobilfunksystem sind exemplarisch eine Funkfeststation BS mit einer Gruppenantenne und eine Mobilstation MS dargestellt. Zwischen den beiden Stationen soll eine Funkübertragung stattfinden, wobei die Funkfeststation ein auf die Mobilstation hin ausgerichtetes Antennendiagramm ausbildet. Ein solches Funksystem, bei dem mittels Gruppenantenne auf jede Mobilstationen ein gerichtetes Antennendiagramm ausgebildet wird, wird auch kurz "SDMA-Mobilfunksystem" genannt (SDMA: Space Divisional Multiple Access).

In Figur 1 ist beispielhaft dargestellt, daß aufgrund von Funkabschattung keine direkte Funkverbindung zwischen der Funkfeststation und der Mobilstation bestehen kann. Es wird hier die Aufwärtsrichtung betrachtet, d.h. die Senderichtung von der Mobilstation zu der Funkfeststation, kurz auch "uplink" genannt. Aufgrund von Mehrwegeausbreitung bestehen jedoch ein erster indirekter Funkweg (durchgezogener Pfeil) und ein zweiter indirekter Funkweg (gestrichelter Pfeil). Am Ort der Funkfeststation BS soll nun die Empfangsrichtung so bestimmt werden, daß die von der Mobilstation MS ausgesendeten Funksignale möglichst ungestört und rauscharm empfangen werden. Da auf direktem Funkwege -sog. "line of sight" keine Funkverbindung besteht, soll die Empfangsrichtung DOA (direction of arrival) möglichst auf dem besten Mehrwegepfad hin, d. h. hier auf den ersten Funkweg hin, ausgerichtet werden. Die Bestimmung der Empfangsrichtung DOA soll außerdem auch zur Ermittlung der Senderichtung verwendet werden. Das erfindungsgemäße Verfahren wird nun anhand der Figur 2 näher beschrieben:

Die Fig. 2 besteht aus zwei Teilfiguren, von denen die erste Fig. 2a das Verfahren 100 mit den Schritten 110 bis 140 in der Gesamtübersicht zeigt und die Fig. 2b eine Unterteilung des Verfahrensschrittes 130 in seine Teilschritte 131 bis 133 zeigt.

In den in Fig. 2a dargestellten Schritte 110 bis 140 des Verfahrens 100 werden folgende Operationen durchgeführt:

In dem ersten Schritt 110 werden für jedes Antennenelement die Meßwerte Empfangspegel und Phasenlage bestimmt. In diesem Beispiel hat die verwendete Gruppenantenne $m=8$ Antennenelemente. Das von der Mobilstation ausgesendete Funksignal $s(t) = \exp(-j\omega t)$ wird als Signal-Vektor $x(t)$ erfaßt, der $m=8$ Elemente. Zur Vereinfachung werden hier nur die Phasen lagen betrachtet. Bezogen auf die Phasenlage des ersten Antennenelementes haben die benachbarten $m-1$ Antennenelemente die Phasenlagen $\varphi 1$, $\varphi 2$, $\varphi 3$, ... $\varphi m-1$.

In dem nächsten Schritt 120 wird nun die symmetrische Matrix A gebildet, in welcher die verschiedenen Phasen lagen eingetragen sind. Die Matrix A ist die Kovarianzmatrix zum Vektor $x(t)$ und hat $m \cdot m$ Elemente, d. h. in diesem Beispiel $m \cdot m = 8 \cdot 8 = 64$ Elemente. Die hier nicht näher beschriebene Bildung einer Kovarianzmatrix ist dem Fachmann an sich bekannt, etwa aus dem Buch "Adaptive Filter Theory" von S. Haykin, 3. Ausgabe, Kapitel 2.3, Seiten 100 u.101, erschienen 1996 im Verlag Prentice Hall, New Jersey, USA. Die Symmetrie der Matrix A zeichnet sich dadurch aus, daß die 8 Zeilenvektoren den 8 Spaltenvektoren entsprechen, bis auf einen Vorzeichenwechsel. Die symmetrische Matrix A ist normiert, so daß auf der Hauptdiagonalen das Einheitselement "1" eingetragen ist. Beispielsweise enthält der erste Zeilenvektor der Matrix A folgende Elemente: $1$, $\exp(-j\varphi_1)$, $\exp(-j\varphi_2)$, ... $\exp(-\varphi_{m-1})$. Der entsprechende erste Spaltenvektor hat folgende 8 Elemente: $1$, $\exp(+\varphi_1)$, $\exp(+j\varphi_2)$, ...$\exp(+j\varphi_{m-1})$.

In dem nächsten Schritt 130 wird für den dominanten Eigenwert $\lambda_1$ der Matrix A der Eigenvektor Wn berechnet, um in einem nächsten Schritt 140 das Antennendiagramm in diese Richtung des berechneten Eigenvektors auszurichten. Die Bildung der Matrix A und die anschließende Berechnung des dominanten Eigen-

wertes $\lambda_1$ wird in diesem Beispiel anhand der "power method" durchgeführt, ein Verfahren, das an sich aus der linearen Algebra bekannt ist und etwa in dem folgenden Buch beschrieben ist: "Linear Algebra" von J. B. Fraleigh et al. im Kapitel 8.4, auf den Seiten 438 - 442, erschienen 1995 (3. Ausgabe) im Verlag Addison-Wesley Publishing Company, Massachusetts, USA.

Mit Verweis auf die dort beschriebene "power method" wird nun anhand der Fig. 2b die Berechnung des Eigenvektors Wn für den dominanten Eigenwert λ1 der Matrix A näher beschrieben:

Die Fig. 2b zeigt schematisch die Aufteilung des Schrittes 130 aus der Fig. 2a in seine drei Teilschritte 131 bis 133. Zur Berechnung des Eigenvektors Wn wird zunächst in einem ersten Teilschritt 131 ein Zähler i auf "1" gesetzt und es wird der i-te Vektor Wi geschätzt. Der Vektor Wi hat m-1 = 7 Elemente, nämlich A1, A2 bis $A_{m-1}$ (m=8).

In einem nächsten Teilschritt 132 wird mit Hilfe des geschätzten Vektors Wi der i-te Produktvektor gebildet durch Multiplikation der Matrix A mit diesem Vektor Wi. Aus dieser Multiplikation A•Wi entsteht ein Spaltenvektor mit m-1 = 8 Elementen P1, P2 bis $P_{m-1}$ (m=8). Der Spaltenvektor wird in einem späteren Schritt 133 noch weiter ausgewertet.

In dem Teilschritt 132 wird auch der i-te Rayleighquotient RQi gebildet. Der Rayleighquotient ist an sich aus der linearen Algebra bekannt (siehe Seite 440 im oben genannten Buch von J. B. Fraleigh et al.) und dient dazu, iterativ sich dem dominanten Eigenwert $\lambda_1$ der Matrix A zu nähern.

In dem nächsten Teilschritt 133 wird zunächst ein neuer Vektor, nämlich der i+ 1-te Vektor $W_{i+1}$ gebildet, indem der zuvor berechnete Produktvektor A·Wi dividiert wird durch einen Faktor d. Dieser Faktor d entspricht dem Maximum aus den m-1 Elementen des oben genannten Spaltenvektors. Mit anderen Worten: Der neue Vektor $W_{i+1}$ wird gebildet aus dem zuvor berechneten Produktvektor durch eine Wichtung mit dem Inversen des Maximums dieses Produktvektors.

In dem nächsten Schritt 134 wird nun geprüft, ob der zuletzt berechnete Vektor $W_{i+1}$ dem gesuchten Eigenvektor Wn entspricht. Als Maß hierfür gilt die Veränderung des Rayleighquotienten, d.h. die betragsmäßige Differenz zwischen dem zuletzt berechneten Rayleighquotienten RQi und dem zuvor berechneten Rayleighquotienten $RQ_{i-1}$. Liegt die Änderung unterhalb eines vorgegebenen Toleranzwertes TOL, so wird der zuletzt berechnete Vektor $W_{i-1}$ als der zu berechnende Eigenvektor Wn der Matrix A angesehen und es wird die Ausrichtung des Antennendiagrammes anhand des Schrittes 140 durchgeführt. Unterschreitet jedoch die Änderung des Rayleighquotienten nicht den vorgegebenen Toleranzwert TOL, so wird der zuletzt berechnete Vektor $W_{i+1}$ dem Teilschritt 132 zugeführt, d.h. die Teilschritte 132 bis 134 werden erneut durchgeführt, wobei der Vektor Wi jetzt dem zuletzt berechneten Vektor $W_{i+1}$ entspricht.

Die Teilschritte 132 bis 134 werden iterativ solange durchgeführt, bis die Änderung des Rayleighquotienten unterhalb des vorgegebenen Toleranzwertes TOL liegt. Dadurch wird erreicht, daß der berechnete Eigenvektor Wn bis auf einen durch den Toleranzwert TOL vorgegebenen Fehler dem tatsächlichen Eigenvektor nahekommt.

Es ist auch denkbar, die in Figur 2b dargestellte Iteration durch eine vorgegebene Anzahl von Durchläufen zu beschränken. Das bedeutet, daß die Iteration nach einer vorgegebenen Anzahl von Durchläufen abgebrochen wird, um die Zeitdauer für die Durchführung des gesamten Verfahrens auf ein maximales Zeitintervall zu beschränken.

Der berechnete Eigenvektor Wn bestimmt die Empfangsrichtung, aus der dasjenige der Mehrwegeempfangssignale empfangen wird, das den höchsten Signalpegel hat. In Bezug auf die in der Fig. 1 dargestellte Situation wird also das Antennendiagramm auf den ersten Funkweg (durchgezogener Pfeil) ausgerichtet. Die Hauptkeule der Gruppenantenne zeigt also in die ermittelte Empfangsrichtung DOA, wobei Nebenkeulen weitestgehend reduziert werden. Unter der Annahme, daß das auf der Hauptkeule empfangene Signal mindestens um 2 db stärker ist als die auf den Nebenkeulen empfangenen Signale, reicht es für einen ungestörten Empfang aus, die Hauptkeule in die beschriebene Empfangsrichtung auszurichten.

Die Nebenkeulenreduktion an der Gruppenantenne kann beispielsweise durch das dem Fachmann an sich bekannte "Tchebychev tapering" verbessert werden. Dadurch wird eine sehr große Dämpfung der Nebenkeulen erzielt.

Aufgrund der berechneten Empfangsrichtung kann auch die Richtung für die Sendesignale bestimmt werden. In diesem Beispiel unterscheiden sich die Empfangsfrequenzen von den Sendefrequenzen, um einen vorgegebenen Duplexabstand von 45 MHz. Auf den verschiedenen Funkfrequenzen ergeben sich verschiedene Mehrwegeausbreitungsbedingungen. Das bedeutet, daß die in Fig. 1 schematisch dargestellte Situation für die Aufwärtsrichtung (Uplink) nicht derselben Situation für die Abwärtsrichtung (Downlink) entspricht. Es ist daher besonders vorteilhaft, wenn der Frequenzabstand (Duplexabstand) bei der Bestimmung der Senderichtung mitberücksichtigt wird. Zur Bestimmung der Senderichtung wird wie folgt verfahren: Der Eigenvektor, der die Empfangsrichtung DOA bestimmt, wird mit einem Gewichtvektor gewichtet, der den Frequenzversatz berücksichtigt. Damit wird für jedes Antennenelement ein Sendesignalvektor berechnet.

Das beschriebene Verfahren ist sehr schnell und erfordert keine aufwendige Prozessorarchitekturen, sondern kann auf üblichen digitalen Signalprozessoren oder auf ähnlichen Prozessoren durchgeführt werden. Deshalb ist das Verfahren nicht nur geeignet innerhalb von Funkfeststationen eingesetzt zu werden, sondern auch innerhalb von Mobilstationen, die mit Gruppenantennen ausgestattet sind.

Bei dem oben beschriebenen Verfahren wurde von einem zunächst nicht modulierten Sinussignal ausgegangen. Es ist jedoch für den Fachmann geläufig, das unmodulierte Signal durch ein moduliertes Signal in den oben angegebenen Verfahrensschritten zu ersetzen.

Die Erfindung eignet sich besonders zum Einsatz in SDMA-Mobilfunksystemen. Jedoch ist es auch denkbar die Erfindung in anderen Funksystemen mit Strahlschwenkung (beam tracking) einzusetzen, so etwa auch in Funknavigationssystemen.

**Patentansprüche**

1. Verfahren (100) zur Bestimmung der Empfangsrichtung eines durch Mehrwegeausbreitung gestörten Funksignals (S), das mittels einer Gruppenantenne, die m (m $\geq$ 1) Antennenelemte hat, empfangen wird, mit folgenden Schritten:

   - Für jedes Antennenelement werden Meßwerte erfaßt, die den Empfangspegel (Sm) und die Phasenlage ($\varphi$m) angeben (Schritt 110); **dadurch gekennzeichnet, daß**
   - die Meßwerte in eine symetrische Matrix (A) eingetragen werden, die M Spalten und M Zeilen hat (Schritt 120); und daß
   - für den dominanten Eigenwert ($\lambda$1) dieser Matrix (A) der Eigenvektor (Wn) berechnet wird, der die Richtung (DOA) angibt, aus der das Funksignal (S) mit dem größten Empfangspegel empfangen wird (Schritt 1 30);

2. Verfahren (100) nach Anspruch 1, dadurch gekennzeichnet, daß der Eigenvektor (Wn) in folgenden Teilschritten berechnet wird, wobei :

   - in einem ersten Teilschritt (131) wird ein Zähler (i) auf Eins gesetzt (i=1) und wird für den dominaten Eigenwert ($\lambda$1) der Matrix (A) ein erster Vektor(Wi mit i=1) geschätzt, der dem gesuchten Eigenvektor (Wn) entsprechen soll;
   - in einem zweiten Teilschritt (132) wird der i-te Produktvektor (A•Wi) aus der Matrix (A) und diesem Vektor (Wi) berechnet und wird der Rayleigh-Quotient (RQ) berechnet, wobei gilt:

   $$RQ = [A•Wi•Wi]/[Wi•Wi];$$

   - in einem dritten Teilschritt (133) wird das Maximum (d) der Komponenten des Produktvektor (A.Wi) berechnet und wird ein neuer Vektor (Wi+1) berechnet, indem der Produktvektor mit dem Inversen (1/d) des Maximums gewichtet wird, wobei gilt: Wi+1 = [1/d]•A•Wi;
   - das Antennendiagramm der Gruppenantenne wird durch Auswertung des zuletzt berechneten Vektors (Wi=n); der der gesuchte Eigenvektor ist, ausgerichtet (Schritt 140).

3. Verfahren (100) nach Anspruch 2, dadurch gekennzeichnet, daß der erste Vektor, der dem gesuchte Eigenvektor (Wn) entsprechen soll, durch Auslesen der ersten Spalte der Matrix (A) ermittelt wird.

4. Verfahren (100) nach Anspruch 2, dadurch gekennzeichnet, daß der zweite und der dritte Teilschritt iterativ solange wiederholt werden, bis der Rayleigh-Quotient sich um weniger als einen vorgebaren Toleranzwert ändert;

5. Verfahren (100) nach Anspruch 2, dadurch gekennzeichnet, daß der zweite und der dritte Teilschritt iterativ solange wiederholt werden, bis eine vorgegebene Anzahl von Durchläufen erreicht wird.

6. Verfahren (100) nach Anspruch 1, dadurch gekennzeichnet, daß der zuletzt berechnete Vektor (Wn) auch zur Bestimmung einer Senderichtung ausgewertet wird, indem durch eine Wichtung des Vektors (Wn) eine Senderichtung bestimmt wird, wobei die Wichtung ermittelt wird aus einem Frequenzversatz zwischen der Sendefrequenz und der Empfangsfrequenz.

7. Funkfeststation (BS) mit einer Gruppenantenne, die m (m $\geq$ 1) Antennenelemte hat, um ein durch Mehrwegeausbreitung gestörtes Funksignal (S) zu empfangen, mit einer damit verbundenen Auswertevorrichtung, die zur Bestimmung der Empfangsrichtung für jedes Antennenelement Meßwerte erfaßt, die den Empfangspegel (Sm) und die Phasenlage ($\varphi$m) angeben,
   **dadurch gekennzeichnet, daß**

   die Funkfeststation (BS) eine mit der Auswertevorrichtung verbundene Speichervorrichtung enthält, die die Meßwerte in Form einer symetrischen Matrix (A), die M Spalten und M Zeilen hat, speichert, und daß
   die Auswertevorrichtung für den dominanten Eigenwert ($\lambda$1) dieser Matrix (A) der Eigenvektor (Wn) berechnet, der die Richtung (DOA) angibt, aus der das Funksignal (S) mit dem größten Empfangspegel empfangen wird.

8. Funksystem, das mindestens eine Funkfeststation (BS) enthält mit einer Gruppenantenne, die m (m $\geq$ 1) Antennenelemte hat, um ein durch Mehrwegeausbreitung gestörtes Funksignal (S) zu empfangen, mit damit verbundenen Auswertevorrichtung, die zur Bestimmung der Empfangsrichtung für jedes Antennenelement Meßwerte erfaßt, die den Empfangspegel (Sm) und die Phasenlage ($\varphi$m) an-

geben,

**dadurch gekennzeichnet, daß**

die Funkfeststation (BS) eine mit der Auswertevorrichtung verbundene Speichervorrichtung enthält, die die Meßwerte in Form einer symetrischen Matrix (A), die M Spalten und M Zeilen hat, speichert, und daß
die Auswertevorrichtung für den dominanten Eigenwert ($\lambda$1) dieser Matrix (A) der Eigenvektor (Wn) berechnet, der die Richtung (DOA) angibt, aus der das Funksignal (S) mit dem größten Empfangspegel empfangen wird.

Fig.1

Funksignal s(t) = exp(-jωt).

Signal-Vektor x(t) erfassen:

$x(t) = [exp(-jωt), exp(-jωt-φ1), exp(-jωt-φ2) ..... exp(-jωt-φm-1)]^t$

Bilde Matrix **A** :

$$\begin{bmatrix} 1 & exp(-jφ1) & exp(-jφ2)..... & exp(-jφm-1) \\ exp(+jφ1) & 1 & exp(-jφ1) & ..... \\ exp(+jφ2) & exp(+jωt) & 1 & ..... \\ ..... & ..... & ..... & ..... \\ exp(+jφm-1) & ..... & ..... & 1 \end{bmatrix}$$

Berechne für den dominanten Eigenwert λ1 der Matrix A den Eigenvektor **Wn** (siehe Fig. 2b).

Richte das Antennendiagramm aus in die Richtung des berechneten Eigenvektors **Wn.**

Fig.2a

Setze Zähler auf Eins: $i = 1$;

131 Schätze Vektor $Wi = [a1, a2, ... am-1]$;

Bilde i-ten Produktvektor:

132 $$A \bullet Wi = \begin{vmatrix} A \end{vmatrix} \bullet \begin{vmatrix} a1 \\ a2 \\ a3 \\ ... \end{vmatrix} = \begin{vmatrix} p1 \\ p2 \\ p3 \\ ... \end{vmatrix}$$

und bilde $$RQi = \frac{A \bullet Wi \bullet Wi}{Wi \bullet Wi}$$

Berechne neuen Vektor $Wi+1$:

133 $Wi+1 = A \bullet Wi / d$, wobei $d = max[p1, p2, p3 ...]$

134 Vergleiche $RQi$ :

$| RQi - RQi-1| < TOL$ ?

NEIN
$(Wi = Wi+1)$

JA
$Wn = Wi+1$

Gehe Zu 140

Fig. 2b